# EUROPEAN PATENT SPECIFICATION

(11) **EP 1 126 721 B1**
(45) Date of publication and mention of the grant of the patent: **14.04.2004**
(21) Application number: 01301393.3
(22) Date of filing: 16.02.2001
(51) Int. Cl.: H04N 7/24, G06F 17/30, G06F 17/60, H04L 12/58, H04M 3/533

(54) **System for generating and playback of annotated multimedia presentations**
System zur Erzeugung und Wiedergabe von mit Anmerkungen versehenen Multimediapräsentationen
Système de génération et de reproduction de présentation multimedia annotée

(30) Priority: 16.02.2000 US 505983
(43) Date of publication of application: 22.08.2001
(73) Proprietor: SIEMENS CORPORATE RESEARCH, INC., Princeton, New Jersey 08540 (US)
(72) Inventor: Liou, Shih-Ping, West Windsor, NJ 08850 (US); Toklu, Candemir, Plainsboro, NJ 08536 (US); Ribier, Richard, Princeton, NJ 08540 (US)
(74) Representative: Allen, Derek

(56) References cited:
- EP-A- 0 662 763
- GB-A- 2 319 135
- US-A- 5 995 091
- US-A- 6 006 241

## Description

### FIELD OF THE INVENTION

The present invention relates to multimedia communications and more particularly to using multimedia streams to generate and playback presentations or messages that can consist of dynamic annotations on multiple images, videos, 3D graphics, digital fax and voice mail, and HTML and Microsoft Office documents.

### DISCRIPTION OF THE PRIOR ART

Due to a rapidly growing number of users and exponentially growing number of connections to the Internet, the Internet has become a widely accepted medium for communication, and as well as shopping and henceforth marketing. The ability to deliver multimedia data over the Internet is limited by bandwidth capacity and cost of the network connection and by the computational capability of the server and client computers. Recently, various companies have developed data streaming methods to deliver good quality multimedia data over even the low bandwidth capacity networks, such as 28.8 or 56 kbits modem connections. In addition, the cost of the network connection has become affordable for many home users because of the fierce competition in ISP market. Furthermore, the computational power of server and client computers is increasing exponentially, while their prices are going down rapidly.

As a result of the above developments, humans now can use the Internet heavily for communicating with each other and sharing their information. However, textual information sharing and communication is not always effective. A renaissance in WWW publishing has recently taken place. Many WWW sites contain multimedia streams, images, videos and 3D graphics to facilitate and enhance the Internet based communication. To better express themselves, people are sending each other images, videos or 3D graphics in addition to their textual message.

Until recently, the multimedia data on a WWW page or in a message are not linked semantically to each other but linked syntactically. However, people are moving away rapidly from this framework. The development of new frameworks has.been witnessed, where the audio or talking head video annotations and other dynamic multimedia content graphically support the multimedia content and enhances the communication. For example, the streaming video is enriched by audio and textual annotations attached to a frame or instance in a video. This is described in "Annotations for Streaming Video on the Web: System Design and Usage Studies" by David Bargeron, Anoop Gupta, Jonathan Grudin, and Elizabeth Sanocki appeared in the Eight International World Wide Web Conference, Toronto Convention Center, Toronto Canada, May 11-14, 1999. This system requires the video playback to be stopped to access the annotations. In another example, the power point presentations are supported by synchronized talking head video annotations [Eloquent Enterprise Communications Portal, http://www.eloquent.com/]. This system is limited to only power point presentation enrichment. Hence, there is a need for developing messaging and communication systems and methods that allow seamless integration of all other of multimedia content into a multimedia presentation for more effective communication.

Another annotation concept, the overlays on the visual multimedia content (a.k.a. graphical annotations), is addressed for images in creating multimedia presentations in US Patent Number 5,838,313 entitled "Multimedia-based Reporting System With Recording And Playback Of Dynamic Annotation," by Ta-Yuan Hou, Wei-Kwan Vincent Su, Thomas Meissner and Arding Hsu and assigned to the same assignee as the present invention. This system does not enable annotation of other multimedia contents such as video, 3D graphics, digital fax and voice mail, and HTML and Microsoft Office documents such as Microsoft Word documents, Excel spreadsheets and Power Point presentations. Another missing component in this system is the attachment of dynamic markers, animated drawings, and hyperlinks to regions or surfaces in the multimedia content. For example, this system does not enable the generation of dynamic markers attached to moving video objects such as cars or people in a scene, animated (flashing) graphical drawings, or 3D markers that stick to a surface in the 3D scene, and scales or moves in that scene as the view point changes. In addition, this system does not allow HTML page annotation, thus link traversal. Therefore, there is a need for developing systems and methods that enable the generation of seamless integration of vast multimedia contents, i.e., multimedia content is not limited to images only, synchronized not only with audio/video annotations but also with graphical annotations like texts, dynamic freeform animated or static graphical drawings, and dynamic region markers: In addition, such systems should allow dynamic hyperlink creation such as hotspots in a video sequence, and hyperlink traversal such as in a web browser.

Such media annotation systems will require proprietary plugins to playback the presentations within one of the conventional Internet applications, the web browser, since the file format for storing the seamlessly integrated (or composed) multimedia presentations is proprietary. Web browsers are now capable of receiving and presenting streaming multimedia content by the freely available plugins provided by RealNetworks Inc. (http://www.real.com/playerplus/) or Microsoft Corp. (http://www.microsoft.com/windows/mediaplayer/). Hence, the delivery of multimedia presentation over the Internet is no longer a problem if they are converted into a collection of known and commonly supported multimedia streams. Therefore, the systems that enable the creation of multimedia presentations need methods and systems for generating multimedia streams of the presentations.

Similar needs exist when it is necessary to mail and playback a graphically annotated multimedia message. It is not always feasible to send a multimedia presentation as a message with attached content, because the multimedia message may be based on video or other large size multimedia content. Therefore, it is also desirable to stream the multimedia content of the message during the playback. As in the case of publishing multimedia presentations on the WWW, it cannot be assumed that the electronic mail recipient would have the media annotation tool installed in his/her computer. Hence, it is desirable to send a self contained executable as an attachment so that it displays the multimedia message.

US Patent number 6,006,241 discloses a system for production of a video stream and separate synchronized annotation streams, in which frames of the annotation streams contain pointers to events of interest or contain displayable data embedded within the annotation stream. UK patent application GB 2319135 discloses a teleconferencing system including electronic mailing of multimedia documents.

The invention is defined in the independent claim, to which reference should now be made. Preferred features are detailed in the sub-claims.

Embodiments and examples of the present invention include a system for: (i) generating and displaying a multimedia presentation using images, video, 3D graphics, digital fax, voice mail, HTML pages, and Microsoft Office documents like Microsoft Word documents, Excel spreadsheets and Power Point presentations with graphical and audio, and/or talking head video annotations; (ii) converting the multimedia presentation into a collection of multimedia streams so that electronic mailers or web browsers can retrieve it either by the help of a freely available streaming media players such as RealPlayer by RealNetworks Inc. (http://www.real.com/playerplus/) or Windows Media Player by Microsoft Corp. (http://www.microsoft.com/windows/mediaplayer/), plus if necessary a proprietary plugin to render the graphical annotations; and (iii) enabling the generation of a multimedia message, which consists of a collection of multimedia streams with graphical and synchronized audio/video annotations, that can be mailed and retrieved by electronic mailers. This invention also provides a system and method for eliminating the need for a proprietary plugin in the case where it is not desired by the clients. This latter system consists of generation of a slide show presentation of the visual content of the multimedia presentation throughout its duration and converting this slide show presentation into a multimedia stream.

### BRIEF DESCRIPTION OF THE DRAWINGS

Additional objects and features of the invention will be more readily apparent from the following detailed description and appended claims when taken in conjunction with the drawings, in which:
FIG, 1 is a block diagram of a preferred embodiment of the present invention for generating multimedia streams.
FIG. 2 is a block diagram of a preferred embodiment of the present invention for generating multimedia presentations and retrieval of these presentations by a client computer.
FIG. 3 is a block diagram of a preferred embodiment of the present invention for generating multimedia messages and retrieval of these messages by a client computer.
FIG. 4 is a block diagram of a preferred embodiment of the present invention for generating multimedia messages with attachments and retrieval of these messages by a client computer.
FIG. 5 is a block diagram of a preferred embodiment of the plugin.
FIG. 6 is a block diagram of a preferred embodiment of the media annotation tool.
FIG. 7 is a block diagram of a preferred embodiment of the multimedia streams generator.
FIG. 8 is a flow'chart of a preferred embodiment of the multimedia presentation generation by the web publisher.
FIG. 9 is a flow chart of a preferred embodiment of the multimedia message generation by the electronic mailer.

### DETAILED DESCRIPTION OF THE INVENTION

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process.steps have not been described in detail in order not to unnecessarily obscure the present invention.

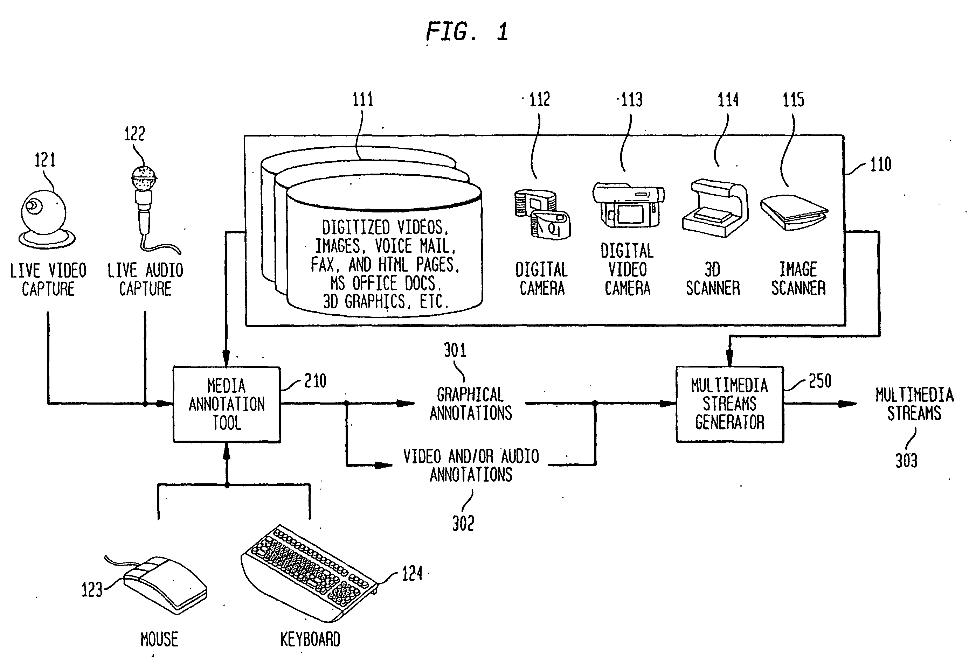

Referring to FIG. 1, there is shown a block diagram of a preferred embodiment for generating multimedia streams, which includes a Media Annotation Tool (MAT) 210 and a Multimedia Streams Generator (MSG) 250.

Information input to the media annotation tool as media sources 110 include digitized videos, images, 3D graphics files, fax and voice mail, and HTML and Office documents 111, digital camera output 112, digital video camera output 113, 3D scanner output 114, and image scanner output 115. Information input to the media annotation tool as annotation sources may. include one or more of the live video capture outputs 121, live audio capture outputs 122, computer mouse actions 123, and computer keyboard entries 124. Information output by the media annotation tool 210 to the multimedia streams generator 250 includes graphical annotations 301 with the audio and/or video annotations 302. Graphical annotations 301 include. events associated to the mouse actions and keyboard entries during the recording of a media annotation session. It is well known to those in the art that the mouse actions and keyboard entries can be caught by an application and interpreted according to specific rules defined by the system to generate events. Each event has a time stamp that represents its time of occurrence. An event could be: (i) to draw a shape with given coordinates and description on the display area of the input media, e.g., a polygonal marker that sticks to a video object in the video scene, or a 3D marker that sticks to a surface in the 3D' scene, or a 3D volume that sticks to an object in the 3D animation; (ii) to draw a static or animated line from the previous position of the mouse to a new location on the display area of the input media, e.g., showing the current flow in an electronic circuit; (iii) to erase such drawings; (iv) to place text that is centered at a position specified by the user on the display area of the input media; (iv) to erase such texts; or (v) a URL, document or presentation display command in a specified window in the client computer, e.g., supporting power point presentations of a live distant learning lecture over the Internet. The audio annotations may include the narration of the semantics of graphical annotations, such as speech or background music. Finally, the video annotations may include the talking head image sequence associated with the audio annotations.

Information input to the multimedia streams generator 250 includes the media sources 110, graphical annotations 301 and video and/or audio annotations 302. Information output to the multimedia streams generator includes the multimedia streams 303 in RealAudio, RealVideo, Real G2 with Flash, RealPix, RealText (http://www.realnetworks.com/products/authkit/index.html), and ASF file formats (http://msdn.microsoft.com/workshop/imedia/windowsmedia/), or any other proprietary file formats, like the stream of events defining the graphical annotations. Multimedia streams in RealAudio, RealVideo, Real G2 with Flash, RealPix, RealText file formats can be played using RealPlayer. Whereas, the multimedia streams in ASF file formats can be played using the Media Player. Finally, any other proprietary file format created by the multimedia streams generator 250 requires the installation of media annotation tool 210 into any client computer for playback of the multimedia streams.

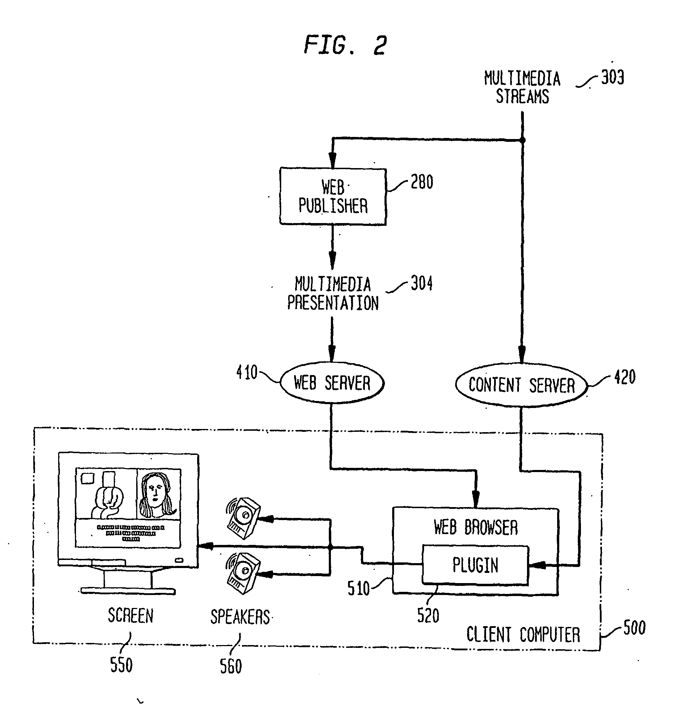

Referring to FIG 2, there is shown a block diagram of a preferred embodiment of the present invention for generating multimedia presentations 304 and retrieval of these presentations by a client computer 500, which includes a web publisher 280, web server 410, content server 420, web browser 510, and a plugin 520.

A multimedia presentation 304 is an interactive and synchronized audio-visual description of a procedure, thing, people, or knowledge. It is composed of various multimedia streams that can be watched in the client computer screen 550 and listened to by the speakers 560 attached to the client computer 500.

The composition, synchronization and playlist of different multimedia streams that compose a multimedia presentation are defined but not limited to using a scripting language such as the Synchronized Multimedia Integration Language (SMIL) by RealNetworks (http://www.realnetworks.com/products/authkit/index.html) or ASX scripting language by Microsoft (http://msdn.microsoft.com/workshop/imedia/windowsmedia/CrCont ent/asx.asp). The multimedia presentation 304 script and a URL link, which is needed to retrieve the multimedia presentation 304 within a web browser 510, are generated by the web publisher 280. The Web server 410 is responsible for sending the script of the multimedia presentation 304 to the client computer 500 over the Internet when requested. On the other hand, the content server 420 sends the multimedia streams over the Internet to the client computer 500. for playback. The plugin 520 decodes the incoming multimedia streams into separate buffers and if necessary creates new buffers, and then renders the buffers to the screen 550 or the speakers 560 of the client computer.

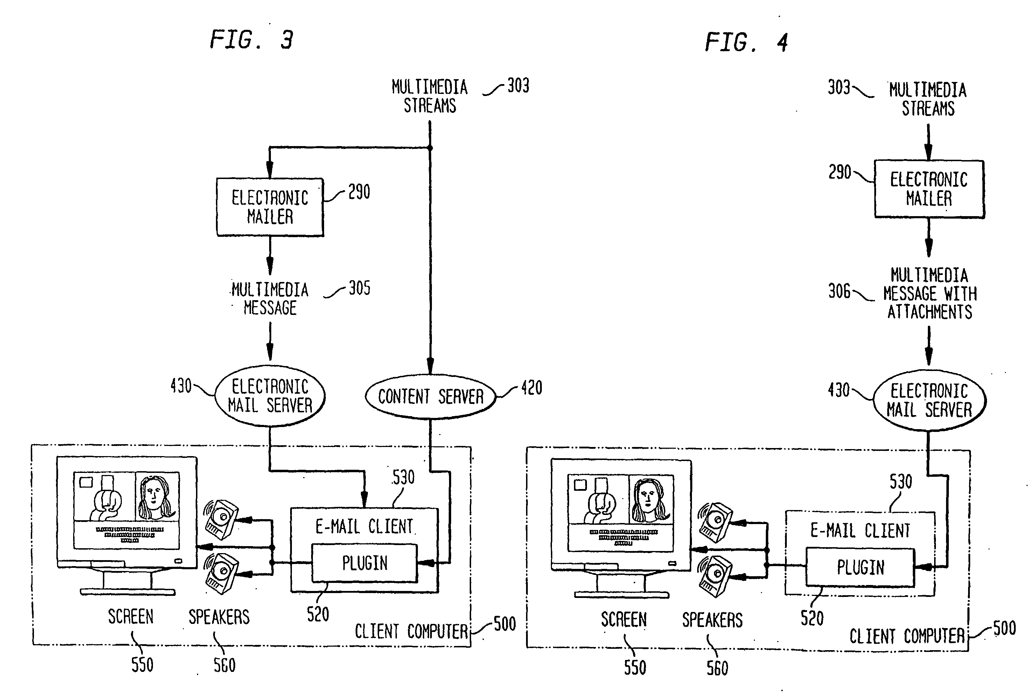

Referring to FIG 3, there is shown a block diagram of a preferred embodiment of the present invention for generating multimedia messages 305 and retrieval of these messages by a client computer 500, which includes an Electronic Mailer 290, electronic mail server 430, content server 420, Electronic mail (E-mail) client 530, and the plugin 520.

A multimedia message 305 is a multimedia presentation with recipients' information and optionally subject that can be sent as an electronic mail, and played back within an E-mail client 530 instead of a web browser 510. The electronic mail server 430 is responsible for sending the multimedia message 306 to a list of recipients. Similarly, the plugin 520 decodes the incoming multimedia presentation corresponding to the message into separate buffers and if necessary create new buffers and renders the buffers to the screen 550 or the speakers 560 of the client computer. Similarly, a URL link, which is generated by the electronic mailer 290, is needed to access the multimedia message 305.. The composition, synchronization and playlist of different multimedia streams that compose a multimedia message are defined again using a scripting language such as the SMIL or ASX. The electronic mailer 290 generates the script. The content server 420 sends the multimedia streams over the Internet to the client computer 500 for playback when a recipient selects to view the message. It is desired that the multimedia message start playing when it is selected from the list of messages in the E-mail client 530. This behavior is called one-click play. The alternative to one-click play requires performing two clicks: (i) opening the multimedia message, and (ii) then clicking the URL link within the message body to start the playback of the multimedia presentation corresponding to the message. One-click play can be implemented within a Microsoft Outlook Form.

Referring to FIG 4, there is shown a block diagram of a preferred embodiment of.the present invention for generating multimedia messages with attachments 306 and retrieval of these messages by a client computer 500, which includes a Electronic Mailer 290, electronic mail server 430, E-mail client 530, and the plugin 520.

A multimedia message with attachments 306 is a message that contains the multimedia streams needed for playback of the multimedia presentation corresponding to the message. The multimedia messages with attachments are accessed through the. E-mail client 530. The electronic mail server 430 is responsible for sending the multimedia message with attachments 306 to a list of recipients. Similarly, the plugin 520 decodes the attached multimedia streams corresponding to the presentation into separate buffers and if necessary create new buffers and renders the buffers to the screen 550 or the speakers 560 of the client computer. There is no need for a URL link to access the multimedia presentation since its components are included in the message. The composition, synchronization and playlist of different multimedia streams that compose a multimedia message could be defined again using a scripting language such as the SMIL or ASX. The electronic mailer 290 generates the script.

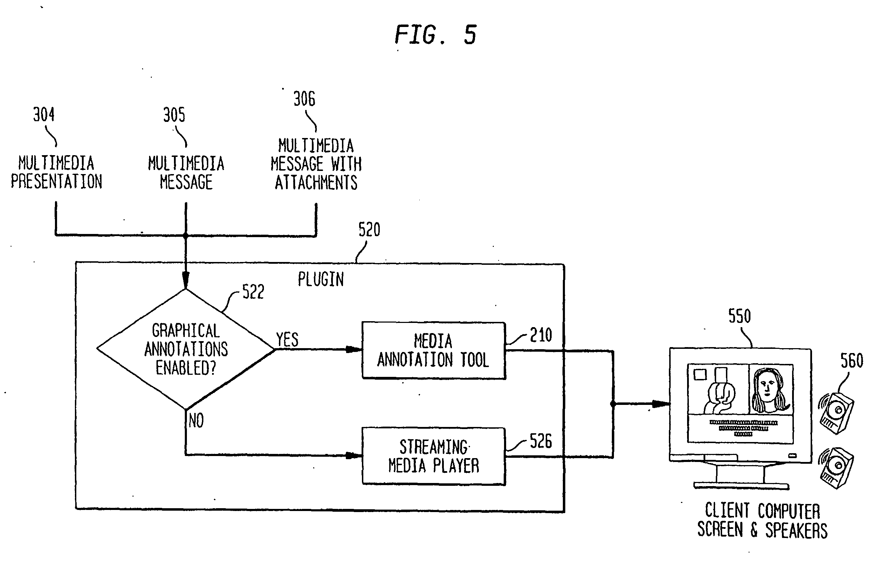

Referring to FIG 5, there is shown a block diagram of a preferred embodiment of the plugin 520, which includes either the media annotation tool 210 or streaming media player 526 depending on the software installed on the client computer and its interface with multimedia presentation 304, multimedia message 305 and multimedia message with attachments 306. If the media annotation tool 210 exists in the client computer 500 (affirmative answer to enable question 522) then the plugin 520 is the media annotation tool 210. Otherwise (negative answer to enable question 522), the plugin is a freely available streaming media player 524 like RealPlayer or Media Player. The information regarding the existence of the media annotation tool 210 can also be stored in the multimedia message 305 body. During the multimedia message 305 creation stage, the system can define the type of the message.and store an integer in the message script for defining the type. The client computer 500 where the plugin 520 is operating can be one of the following three types: (i) with media annotation tool 210; (ii) without the media annotation tool 210; and (iii) the media annotation tool 210 with the multimedia message 305, 306 are received as an attachment to regular E-mail. If the media annotation tool 210 with the multimedia message 305, 306 are received at the client computer 500 as an attachment then, this attachment launches itself as a self-contained executable and plays the multimedia messages 305, 306 automatically when it is selected.

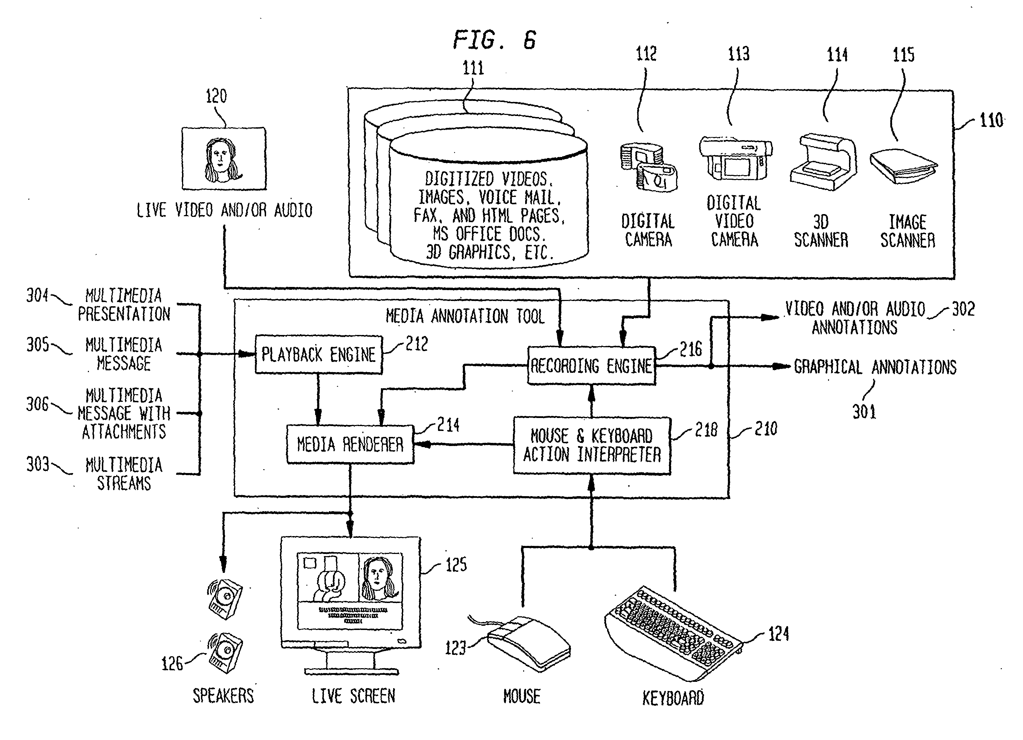

Referring to FIG. 6, there is shown a block diagram of a preferred embodiment of the media annotation tool 210, which includes a playback engine 212, media renderer 214, recording engine 216, and mouse and keyboard action interpreter 218.

Information input to the media annotation tool 210 includes the media sources 110, optionally live video and/or audio capture 120, mouse 123 and keyboard 124 actions in the case of media annotation recording, and multimedia presentations 304, multimedia messages 305, multimedia messages with attachments 306 or, hence, multimedia streams 303 in the case of media annotation playback. On the other hand, information output from the media annotation tool 210 includes one or more of the video and/or audio annotations 302 and graphical annotations 301 in the case of media annotation recording, audio-visual renderings of such annotations on the screen 125 and the speakers 126 of the computer in the case of media annotation playback:

The playback engine 212 is responsible for decomposing a multimedia presentation 304, multimedia message 305 or multimedia message with attachments 306 into multimedia streams 303 and then decoding the streams into buffers or if necessary creating new buffers, which are to be rendered to the screen 125 or the speakers 126 of the computer by the media renderer module 214. The media renderer module 214 is also responsible for the synchronization, composition and mixing of the data buffers corresponding to different multimedia streams, such as compositing graphical annotations onto images.

The mouse and keyboard action interpreter 218 is responsible for converting mouse and keyboard events into events that represent graphical annotations of the input media. Finally, the recording engine 216 module saves all the incoming information such as graphical annotation events and live video and/or capture and time stamp each information accordingly to the their occurrence into annotation files.

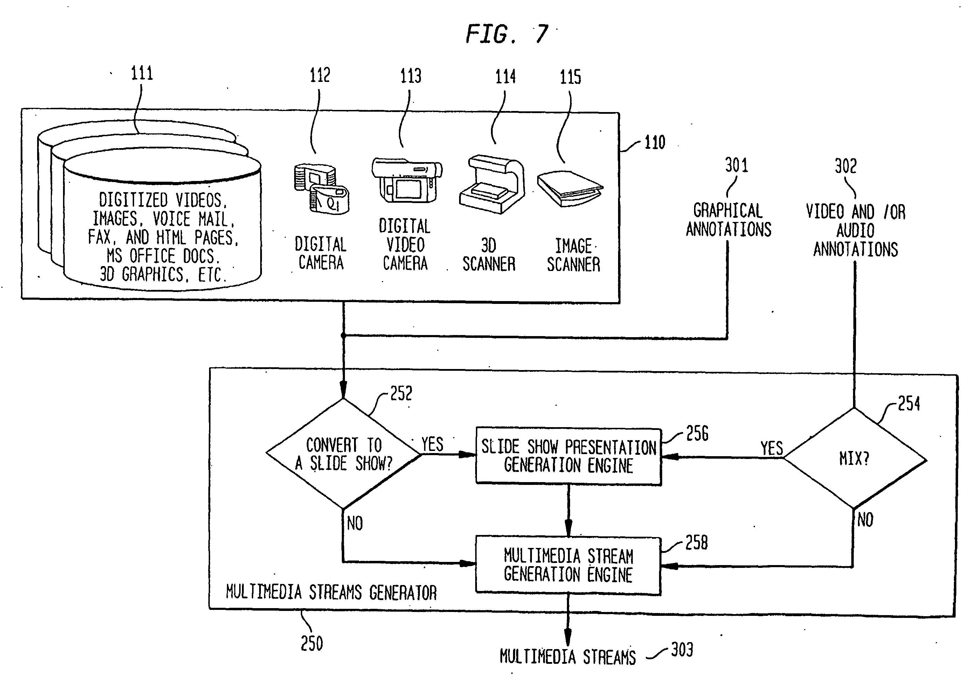

Referring to FIG. 7, there is shown a block diagram of a preferred embodiment of the multimedia streams generator 250, which includes a video generation engine 256 and multimedia streams generation engine 258.

Information input to the multimedia streams generator 250 includes the media sources 110, graphical annotations 301 and video and/or audio annotations 302. Information output from the multimedia streams generator 250 includes the multimedia streams 303.

As described above, it is desirable to create multimedia presentations which could be accessed by the clients without the need for installing the proprietary multimedia annotation tool, which is currently necessary for playing back the graphical annotations, into their computers. In the present invention, a stack of images with time stamps of the multimedia presentation is generated using the slide show presentation generation engine 256, and then this slide show presentation is converted into a multimedia stream using the multimedia stream generation engine 258. The user who is generating the multimedia annotations makes the conversion decision 252 for generating a slide show presentation. For example, if the user is preparing a multimedia presentation, which will be posted in the WWW and accessible by the public by web browsers, then the conversion decision 252 could most likely be affirmative. If the user is preparing a multimedia message 305, 306, then the multimedia streams generator pops up a dialog window on the computer screen for asking the user his/her choice. The conversion decision 252 can also be read from a database, if the message sender prefers to keep a database of recipients' preferences and/or service levels. There exists a mix decision 254 that has to be taken by the multimedia streams generator. The user of the system or the system itself may decide to reduce the number of multimedia streams 303 that forms a multimedia presentation 304 for simplicity. In the case the video and audio annotations come from different sources, the slide show presentation generation engine 256 can mix the two into a video annotation with mixed sound track, since video is nothing but a slide show presentation with fixed frame rate. Similarly, the whole multimedia presentation with graphical, audio and video annotations can be converted into a composite slide show presentation with mixed sound and visual information. As in the case of the conversion decision 252, this mix decision 254 regarding the mixing can be made by the user using a dialog box or can be read from a database. The selection of the images for generating the image slide show presentation of the multimedia annotation is an important problem. In the preferred embodiment of this invention, it is suggested to use the screen dumps of the changing visual data that is displayed within the media annotation tool at the recording instances of the annotations. Since each graphical annotation has a time stamp, which screen dump is visible at the time of drawing a marker or line is known. The sampling rate of the visual data whose screen dumps are captured depends on the multimedia content being annotated. For example for video, the sampling rate is the video sampling rate, and for 3D animations or any HTML and Office document animation, the sampling rate is the rate of change of the animations specified by the originator of such documents. When manipulating a 3D scene or an object, or scrolling down or up within the display window of the media annotation tool, a screen dump is created at preferably every 40 milliseconds. For each screen dump, a time stamp is also stored, as is done for each graphical annotation. Given the screen dumps and the graphical annotations, a slide show presentation can be generated by overlaying the corresponding drawings on top of the screen dumps.

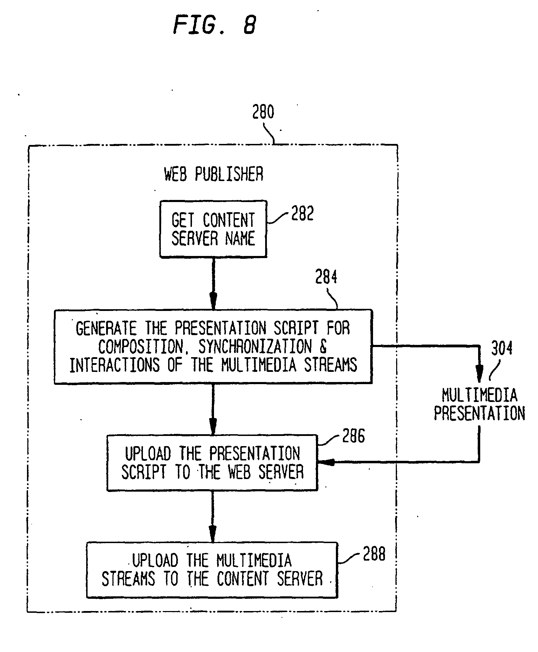

Referring to FIG. 8, there is shown a flow chart of a preferred embodiment of the multimedia presentation generation by the web publisher 280, which is used for getting 282 the name of the content server, generating 284 the presentation script that defines the composition, interactions and synchronization of the multimedia presentation 304 of the multimedia streams, script uploading 286 the presentation script to a web server, and finally stream uploading 288 the multimedia streams to the content server. As described earlier, the scripting languages such as SMIL and ASX can be used to create the presentation script.

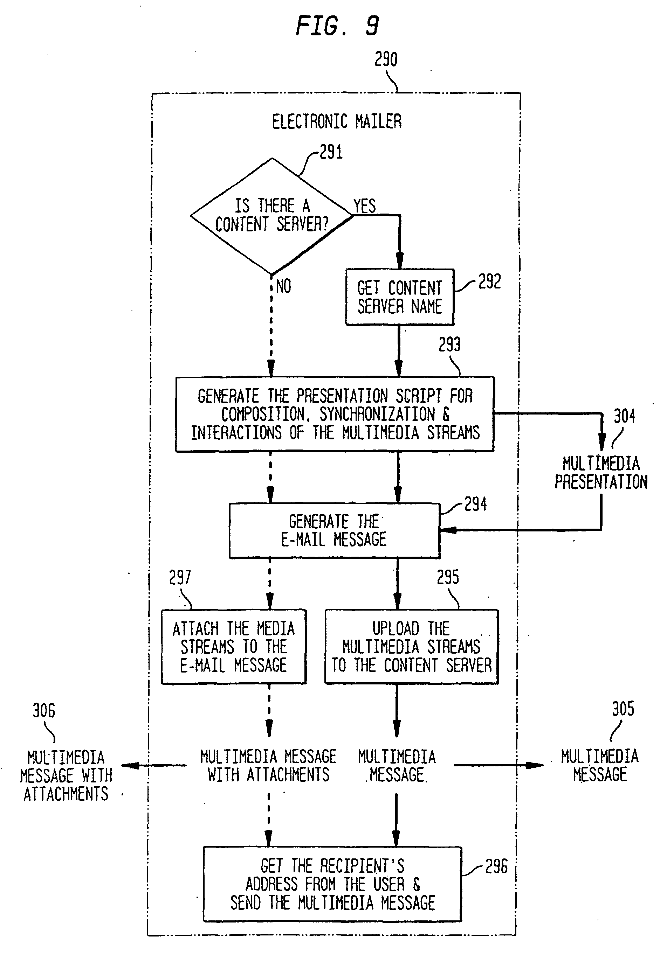

Referring to FIG. 9, there is shown a flow chart of a preferred embodiment of the multimedia message 305 or multimedia message with attachments 306 generation by the electronic mailer 290.

The initial step of the message generation is to decide, through content server decision 291, what type of message to send. If the computer system where the electronic mailer is operating has a content server then the content server decision 291 is affirmative and the following steps are carried out to send the multimedia message 305: (i) getting the name of the content server 292; (ii) generating the presentation script that defines the composition, interactions and synchronization of the multimedia presentation of the multimedia streams 293; (iii) generating the e-mail message by defining its type and generating the URL link that points to the multimedia presentation 294; (iv) uploading the multimedia streams.to the content server 295; and (v) finally getting the recipients' addresses from the user and then sending the multimedia message 296. If there does not exist a content server (negative decision at content server decision 291), then the following steps are carried out for sending the multimedia message: (i) generating the presentation script' that defines the composition, interactions and synchronization of the multimedia presentation of the multimedia streams 293; (ii) generating the e-mail message by defining its type 294; (iii) attaching the multimedia streams to the e-mail message 297; and (iv) finally getting the recipients' addresses from the user and then sending the multimedia message with attachments 296.

## Claims

1. A system for generating and playback of annotated multimedia presentations comprising:
a media annotation tool (210) for annotating media sources (110) with graphical, video and/or audio annotations, the media annotation tool having both recording and playback abilities;
a multimedia streams generator (250) comprising a video generation engine to produce annotated multimedia streams from the annotated media sources; and
an electronic mailer (290) for generating a multimedia message including recipients' information and a multimedia presentation from the streams, wherein the electronic mailer (290) is adapted to send an annotated multimedia presentation via an electronic mail message, wherein said media annotation tool is sent as a self-contained executable attachment to said electronic mail message, and said self-contained executable attachment is adapted to be used as a plug-in in a recipient's email client for playing back said annotated multimedia presentation.

2. The system as recited in claim 1, adapted to retrieve an annotated multimedia presentation sent via an electronic mail message by means of a URL embedded in said electronic mail message, wherein said annotated multimedia presentation is streamed to said electronic mailer (290) through said embedded URL.

3. The system as recited in claim 2, being adapted to read an integer stored at the beginning of the annotated multimedia presentation, to enable the determination of the type of annotated multimedia presentation.

## Patentansprüche

1. System zum Erzeugen und Wiedergeben von kommentierten Multimediapräsentationen, umfassend:
ein Medienkommentierungswerkzeug (210) zum Kommentieren von Medienquellen (110) mit graphischen Kommentaren sowie Video- und/oder Audiokommentaren, wobei das Medienkommentierungswerkzeug sowohl aufzeichnen als auch wiedergeben kann;
einen Generator (250) für Multimediaströme, umfassend eine Videoerzeugungsmaschine, die kommentierte Multimediaströme aus den kommentierten Medienquellen erzeugt; und
einen elektronischen Mailer (290), der eine Multimedianachricht einschließlich Rezipienteninformation und eine Multimediapräsentation aus den Strömen erzeugt, wobei der elektronische Mailer (290) so eingerichtet ist, dass er eine kommentierte Multimediapräsentation über eine elektronische Postnachricht versendet, und das Medienkommentierungswerkzeug als in sich abgeschlossener ausführbarer Anhang an die elektronische Postnachricht gesendet wird, und der in sich abgeschlossene ausführbare Anhang so gestaltet ist, dass er als Plug-in in einem Email-Client des Rezipienten verwendbar ist, das die kommentierte Multimediapräsentation wiedergibt.

2. System nach Anspruch 1, das dafür eingerichtet ist, eine kommentierte Multimediapräsentation wiederherzustellen, die über eine elektronische Postnachricht gesendet wird, und zwar mit Hilfe einer URL, die in die elektronische Postnachricht eingebettet ist, wobei die kommentierte Multimediapräsentation über die eingebettete URL als Datenstrom an den elektronischen Mailer (290) gesendet wird.

3. System nach Anspruch 2, das dafür eingerichtet ist, eine ganze Zahl zu lesen, die am Beginn der kommentierten Multimediapräsentation gespeichert ist, damit das Erkennen des Typs der kommentierten Multimediapräsentation ermöglicht wird.

## Revendications

1. Un système de génération et de reproduction de présentations multimédia annotées comprenant :
un outil d'annotation de média (210) pour annoter des sources de média (110) avec des annotations graphiques, vidéo et/ou audio, l'outil d'annotation de média présentant à la fois des capacités d'enregistrement et de reproduction ;
un générateur de courants multimédia (250) comprenant un moteur de génération vidéo pour produire des courants multimédias annotés à partir des sources de média annotées ; et
un expéditeur électronique (290) pour générer un message multimédia comprenant des informations de destinataires et une présentation multimédia à partir des courants, où l'expéditeur électronique (290) est adapté pour envoyer une présentation multimédia annotée par l'intermédiaire d'un message de courrier électronique, où ledit outil d'annotation de média est envoyé audit message de courrier électronique sous la forme d'un dispositif auto-contenu exécutable, ledit dispositif auto-contenu exécutable étant adapté pour être utilisé en tant qu'unité enfichable chez un client de courriel de destinataire pour reproduire ladite présentation multimédia annotée.

2. Le système tel qu'énoncé à la revendication 1, adapté à récupérer une présentation multimédia annotée envoyée par l'intermédiaire d'un message de courrier électronique au moyen d'un URL intégré dans ledit message de courrier électronique, où ladite présentation multimédia annotée est envoyée sous forme de courants vers ledit expéditeur électronique (290) par l'intermédiaire dudit URL intégré.

3. Le système tel qu'énoncé à la revendication 2, qui est adapté pour lire un nombre entier stocké au début de la présentation multimédia annotée, pour permettre la détermination du type de présentation multimédia annotée.
